(19) **Europäisches Patentamt / European Patent Office / Office européen des brevets**

(11) **EP 1 161 851 B1**

(12) **EUROPEAN PATENT SPECIFICATION**

(45) Date of publication and mention of the grant of the patent:
**30.07.2014 Bulletin 2014/31**

(51) Int Cl.:
***H04L 12/851*** (2013.01)

(21) Application number: **99908982.4**

(22) Date of filing: **17.03.1999**

(86) International application number:
**PCT/FI1999/000198**

(87) International publication number:
**WO 2000/056114 (21.09.2000 Gazette 2000/38)**

(54) **METHOD AND APPARATUS FOR PROVIDING FAIR TRAFFIC SCHEDULING AMONG AGGREGATED INTERNET PROTOCOL FLOWS**

VERFAHREN UND VORRICHTUNG ZUM BEREITSTELLEN AUSGEGLICHENER VERKEHRSPLANUNG UNTER ANGEHÄUFTEN INTERNET-PROTOKOLL-FLÜSSEN

PROCEDE ET APPAREIL D'ORDONNANCEMENT EQUITABLE DU TRAFIC ENTRE DES FLUX INTERNET REGROUPES

(84) Designated Contracting States:
**DE FR GB IT**

(43) Date of publication of application:
**12.12.2001 Bulletin 2001/50**

(73) Proprietor: **Nokia Corporation**
**02610 Espoo (FI)**

(72) Inventors:
- **MARKKI, Outi**
  **FIN-02600 Espoo (FI)**
- **SOIRINSUO, Timo**
  **Cambridge, MA 02139 (US)**

(74) Representative: **Berggren Oy Ab**
**P.O. Box 16**
**Antinkatu 3 C**
**00101 Helsinki (FI)**

(56) References cited:
**EP-A1- 0 782 300    EP-A2- 0 763 915**
**WO-A1-97/13346    WO-A2-98/26510**
**US-A- 5 499 238    US-A- 5 828 653**

- **Proc. IEEE Infocom, March 1996, "Flow Labelled IP: A Connectionless Approach to ATM", P. Newman et al., pages 1251-1260, XP000622261.**

**Description**

<u>BACKGROUND OF THE INVENTION</u>

1. <u>Field of the Invention.</u>

This invention relates in general to a method and apparatus for controlling Internet Protocol flows, and more particularly to a method and apparatus for providing fair traffic scheduling among aggregated IP flows.

2. <u>Description of Related Art.</u>

Today, an organization's computer network has become its circulatory system. Organizations have combined desktop work stations, servers, and hosts into Local Area Network (LAN) communities. These Local Area Networks have been connected to other Local Area Networks and to Wide Area Networks (WANs). It has become a necessity of day-to-day operation that pairs of systems must be able to communicate when they need to, without regard to where they may be located in the network.

During the early years of network computing, proprietary networking protocols were the standard. However, the development of the Open Systems Interconnection Reference Model introduced by the International Organization for Standardization (ISO) has led to an impressive degree of interworking, which generally allows end-user applications to work very well between systems in a network. Implementations are based on written standards that have been made available by volunteers from dozens of computer vendors, hardware component vendors and independent software companies.

During the last decade, LANs have been proliferating. This has created a recurring problem of how to minimize congestion and optimize throughput that must be solved by network managers. An early solution was to simply divide Local Area Networks into multiple smaller networks serving smaller populations. These segments were connected by bridges to form a single Local Area Network with traffic being segregated locally to each segment.

The evolution of new network types and Wide Area Networks created a need for routers. Routers added filtering and firewalling capability to provide more control over broadcast domains, limit broadcast traffic and enhance security. A router is able to chose the best path through the network due to embedded intelligence. This added intelligence also allowed routers to build redundant paths to destinations when possible. Nevertheless, the added complexity of best path selection capability accorded by the embedded intelligence increased the port cost of routers and caused substantial latency overhead. Shared-media networks comprising distributed client/server data traffic, expanded user populations and more complex applications gave birth to new bandwidth bottlenecks. Such congestion produced unpredictable network response times, the inability to support the delay-sensitive applications and higher network failure rates.

Networks and protocols in use today have been designed to operate using connection-less transmission technology based on global addressing. The most popular protocol of this type is the Internet Protocol (IP).

An internet is a set of networks connected by gateways, which are sometimes referred to as routers. The Internet Protocol is a network layer protocol that routes data across an internet. The Internet Protocol was designed to accommodate the use of host and routers built by different vendors, encompass a growing variety of growing network types, enable the network to grow without interrupting servers, and support higher-layer of session and message-oriented services. The IP network layer allows integration of Local Area Network "islands". Still, graphics and multimedia content are putting more demand on the performance of such networks. As the number of users increases network traffic, bandwidth becomes increasingly problematic. While the Internet continues to grow, so does the intranet as more and more private enterprise networks are being based on the Internet Protocol.

IP traffic is carried over various data link layers (L2) and transmission media. IP consists of flows, which are sequences of interrelated packets that are sent from a source to a destination(s). Multiple IP flows can be conveyed over a single data link.

In cases where logical data link layer connections can be used, two possibilities exist for carrying IP flows over data link layer connections. A data link layer (L2) connection can either be dedicated for a single IP flow or, alternatively, several flows can be multiplexed into one connection. If these different types of L2 connections have the same L2 traffic class, the connections are competing for the same network resources. If both of these methods of utilizing L2 connections are used in the network at the same time and, as is generally the case, fairness between users of the IP network (i.e., fairness among aggregated IP flows in an IP network) has to be guaranteed. In general, the IP flows which have the identical level of IP Quality of Service should get equal treatment in the network. However, a simple scheduling algorithm where one L2 data unit is taken from each queue, as currently implemented in the art, in turns favors connections that carry only one or few IP flows. Therefore, more sophisticated approaches have been tried.

For example, an approach of measuring carried traffic over a particular connection in terms of bytes or frames transferred over an L2 connection is straightforward. However, fair scheduling cannot be based solely on traffic volume. Otherwise, bandwidth intensive flows would disproportionately dominate the traffic flow at the cost of the other flows. To provide fairness at the IP level, information is needed about the number of flows using each connection. Unfortunately, traffic monitoring cannot be done at the data link layer as interpretation of the traffic is based on the information carried in the higher level protocol data units. Nevertheless, there are three basic methods that can used for obtaining the necessary information on flows.

The first method, Out-of-Band notification, uses a separate IP level protocol to inform network elements along the path of an L2 connection on the approximate number of users. This information is more naturally generated by the edge devices. Out-of-Band notification can also be given to a network element via a network management system through an operator's initiative, which is further distributed among network elements by the separate IP level protocol. However, a solution where network management configures these values to each network element is not scaleable to large networks.

The second method is packet snooping. Packet snooping involves intermediate network elements periodically analyzing the traffic flow to get an idea about how many flows utilize each L2 connection.

The third method is an implicit method, e.g., different logical identifier ranges are used for different aggregation levels. When setting up an L2 connection, e.g., tag switching or other IP switching methods like Ipsilon flow management schemes, the IP address is taken into account when deciding the service level. If the address is associated with a network, then it is likely that more flows will use that L2 connection. Also, the address can provide an indication of the size of the target network. With IPv4 network classification, for example, this implementation is straightforward.

Still, using a separate IP level protocol requires standardization and implicit methods, although seemingly straightforward, requires careful configuration between adjacent network elements. However, packet snooping can be implemented individually by each network element.

Publication EP 0 763 915 A 2 discloses a plurality of packet classes, each class stored separately at input buffers class by class. A control unit determines the selected class to be output from the input buffer according to a packet storage state in the packet storage unit as a whole for each class, or according to an output state of packets previously selected as a whole for each class. Thus, the packets are class by class stored. The packets are also referred to as flow. The packets as classes can have different priority levels but this is done at the point when they are already received in the device.

IEEE Infocom publication D2, March 1996, "Flow Labelled IPP: A Connectionless Approach to ATM", P. Newman at al., pages 1251-1260 discloses a flow classification to determine whether some packets belong to the same flow. Also, D2 suggests that each flow is classified as part of the forwarding operation and quality of service information may be included in the flow classification decision based upon the application, the type of service field in the IP header, the protocol, etc. Moreover, an IP switch should be configured to redirect all flows requesting bandwidth reservation in order to switch them. This will allow the traffic management capabilities of the ATM hardware to be employed to guarantee the requested quality of service.

Publication EP 0 782 300 A2 discloses a scheduling method which is used for rate-based scheduling (e.g., for scheduling flows at some assigned rates in a computer network) or for weighted fair sharing of a common resource (e.g., scheduling weighted jobs in a processor). The method is based on hierarchical application of Relative Error (RE) scheduling.

It can be seen then that there is a need for a method and apparatus that provides for fair traffic scheduling. It can also be seen that there is a need for a fair traffic scheduling method and apparatus that can be implemented by each network element.

## SUMMARY OF THE INVENTION

To overcome the limitations in the prior art described above, and to overcome other limitations that will become apparent upon reading and understanding the present specification, the present invention is directed to a method and apparatus that provides for fair traffic scheduling.

The present invention solves the above-described problems according to claim 1 and claim 13, i.e. by providing a method and apparatus for scheduling the IP flows according to a priority coefficient, rather than according to traffic volume solely.

The system in accordance with the principles of the present invention identifies a number of IP flows for a plurality of connections, assigns a priority coefficient for each of the IP flows and schedules the IP flows according to the priority coefficient.

Other embodiments of a system in accordance with the principles of the invention may include alternative or additional aspects.

Another aspect of the present invention concerns the step of identifying the number of IP flows, which further comprises the steps of monitoring packets carried over an L2 connection, extracting address information from the packets for a predetermined sample period, storing the extracted address information, counting the number of extractions stored and estimating the number of IP flows based upon the number of stored extractions counted.

Another aspect of the present invention involves the step of extracting address information, which comprises the step of extracting full source address:port and destination address:port from the packets.

Yet another aspect of the present invention concerns the step of extracting address information, which comprises the step of extracting only a host part of an IP address and port from the packets.

Another aspect of the present invention concerns the step of storing the address information, which further comprises the step of compressing the extracted address information.

Another aspect of the present invention concerns the step of monitoring packets, which comprises the steps of replicating PDUs and directing the replicated PDUs to a processor for address extraction.

Another aspect of the present invention concerns the processor, which is outside the data path.

Another aspect of the present invention concerns the step of monitoring packets, which comprises the step of sampling the packets along the data path.

Another aspect of the present invention concerns the predetermined sample period, which comprises a selected time duration.

Still another aspect of the present invention concerns the predetermined sample period, which comprises the time required to sample a predetermined number of packets.

Another aspect of the present invention involves the step of assigning a priority coefficient, which further comprises the step of gaining a higher priority coefficient to a connection having more users.

Another aspect of the present invention concerns the step of assigning a coefficient factor, which further comprises the step of differentiating a flow based on a management parameter.

Another aspect of the present invention concerns the management parameter, which comprises operational and administrative considerations.

Another aspect of the present invention concerns the step of assigning a priority coefficient, which is based upon a fee structure for different flow types.

These and various other advantages and features of novelty which characterize the invention are pointed out with particularity in the claims annexed hereto and form a part hereof. However, for a better understanding of the invention, its advantages, and the objects obtained by its use, reference should be made to the drawings which form a further part hereof, and to accompanying descriptive matter, in which there are illustrated and described specific examples of an apparatus in accordance with the invention.

BRIEF DESCRIPTION OF THE DRAWINGS

Referring now to the drawings in which like reference numbers represent corresponding parts throughout:

Fig. 1 illustrates the Open Systems Interconnection (OSI) model;
Fig. 2 is a comparison illustrating where the IP network layer fits in the OSI seven layer model;
Fig. 3 illustrates a model of a flow based on traffic activity from endpoints as perceived at a given network measurement point;
Fig. 4 illustrates the IPv6 header format;
Fig. 5 illustrates two monitoring methods; and
Fig. 6 is a flowchart illustrating the steps for approximating the number of flows and scheduling fair traffic allocation.

DETAILED DESCRIPTION OF THE INVENTION

In the following description of the exemplary embodiment, reference is made to the accompanying drawings which form a part hereof, and in which is shown by way of illustration the specific embodiment in which the invention may be practiced. It is to be understood that other embodiments may be utilized as structural changes may be made without departing from the scope of the present invention.

The present invention provides a method and apparatus for scheduling the IP flows according to the priority coefficient rather than according to pure traffic volume. According to the invention, the scheduling of IP flows are prioritized by identifying a number of IP flows for a plurality of connections, assigning a priority to each of the IP flows based on the identified number of IP flows and scheduling the forwarding of packets in the IP flows according to the assigned priority. The priority coefficient can be used to differentiate a flow based on a management parameter such as operational and administrative considerations. Further, the priority coefficient can be based upon a fee structure for different flow types.

Thus, the IP flows may be prioritized, rather than simply taking an L2 data unit from each queue in accordance with a prior art approach. The routing and relaying of data through the network occurs in the network layer of the seven layer Open Systems Interconnection (OSI) model. The network layer will now be described with reference to the seven layer OSI model.

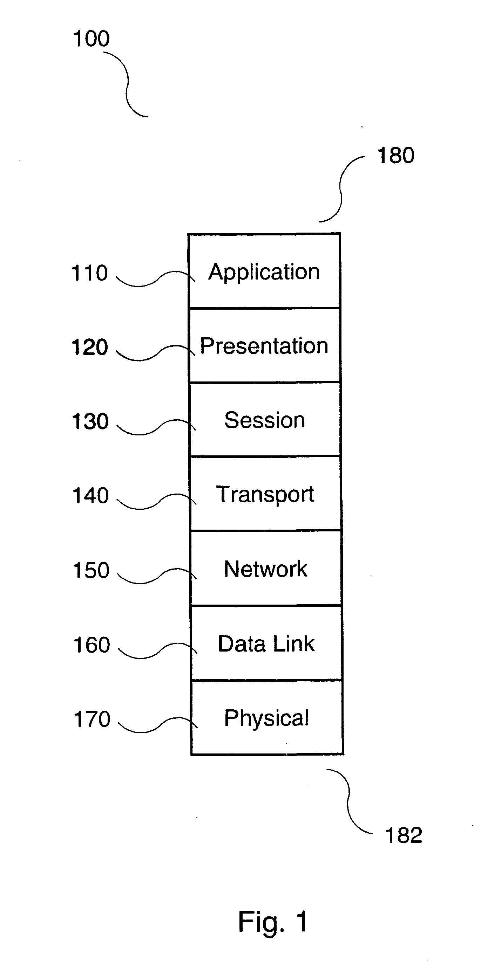

Fig. 1 illustrates the Open Systems Interconnection (OSI) model 100 which includes seven layers, including an application 110, presentation 120, session 130, transport 140, network 150, link 160, and physical layer 170. The OSI model 100 was developed by the International Organization for Standardization (ISO) and is described in "The Basics Book of OSI and Network Management" by Motorola Codex from Addison-Wesley Publishing Company, Inc., 1993 (First Printing September 1992).

Each layer of the OSI model performs a specific data communications task, a service to and for the layer that precedes it (e.g., the network layer provides a service for the transport layer). The process can be likened to placing a letter in a series of envelopes before it is sent through the postal system. Each succeeding envelope adds another layer of processing or overhead information necessary to process the transaction. Together, all the envelopes help make sure the letter gets to the right address and that the message received is identical to the message sent. Once the entire package is received at its destination, the envelopes are opened one by one until the letter itself emerges exactly as written.

In a data communication transaction, however, each end user is unaware of the envelopes, which perform their functions transparently. For example, an automatic bank teller transaction can be tracked through the multi-layer OSI system. One multiple layer system (Open System A) provides an application layer that is an interface to a person attempting a transaction, while the other multiple layer system (Open System B) provides an application layer that interfaces with applications software in a bank's host computer. The corresponding layers in Open Systems A and B are called peer layers and communicate through peer protocols. These peer protocols provide communication support for a user's application, performing transaction related tasks such as debiting an account, dispensing currency, or crediting an account.

Actual data flow between the two open systems (Open System A and Open System B), however, is from top 180 to bottom 182 in one open system (Open System A, the source), across the communications line, and then from bottom 182 to top 180 in the other open system (Open System B, the destination). Each time that user application data passes downward from one layer to the next layer in the same system, more processing information is added. When that information is removed and processed by the peer layer in the other system, it causes various tasks (error correction, flow control, etc.) to be performed.

The ISO model has specifically defined all seven layers, which are summarized below in the order in which the data actually flows as they leave the source:

Layer 7, the application layer 110, provides for a user application (such as getting money from an automatic bank teller machine) to interface with the OSI application layer. The OSI application layer 110 has a corresponding peer layer in the other open system, the bank's host computer.

Layer 6, the presentation layer 120, makes sure the user information (a request for $50 in cash to be debited from your checking account) is in a format (i.e., syntax or sequence of ones and zeros) the destination open system can understand.

Layer 5, the session layer 130, provides synchronization control of data between the open systems (i.e., makes sure the bit configurations that pass through layer 5 at the source are the same as those that pass through layer 5 at the destination).

Layer 4, the transport layer 140, ensures that an end-to-end connection has been established between the two open systems and is often reliable (i.e., layer 4 at the destination confirms the request for a connection, so to speak, that it has received from layer 4 at the source).

Layer 3, the network layer 150, provides routing and relaying of data through the network (among other things, at layer 3 on the outbound side, an address gets placed on the envelope which is then read by layer 3 at the destination).

Layer 2, the data link layer 160, includes flow control of data as messages pass down through this layer in one open system and up through the peer layer in the other open system.

Layer 1, the physical interface layer 170, includes the ways in which data communications equipment is connected mechanically and electrically, and the means by which the data moves across those physical connections from layer 1 at the source to layer 1 at the destination.

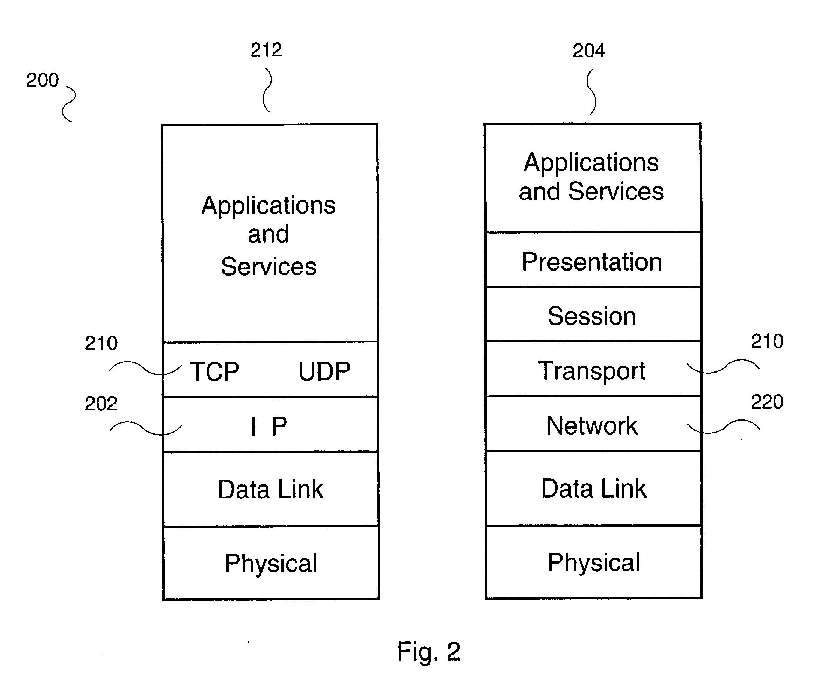

Fig. 2 is a comparison 200 illustrating where the IP network layer 202 fits in the OSI seven layer model 204. In Fig. 2, the transport layer 210 provides data connection services to applications and may contain mechanisms that guarantee that data is delivered error-free, without omissions and in sequence. The transport layer 210 in the TCP/IP model 212 sends segments by passing them to the IP layer 202, which routes them to the destination. The transport layer 210 accepts incoming segments from IP 202, determines which application is the recipient, and passes the data to that application in the order in which it was sent.

Thus, the IP 202 performs network layer functions and routes data between systems. Data may traverse a single link or may be relayed across several links in an internet. Data is carried in units called datagrams, which include an IP header that contains layer 3 220 addressing information. Routers examine the destination address in the IP header in order to direct datagrams to their destinations. The IP layer 202 is called connectionless because every datagram is routed independently and the IP layer 202 does not guarantee reliable or in-sequence delivery of datagrams. The IP layer 202 routes its traffic without caring which application-to-application interaction a particular datagram belongs to.

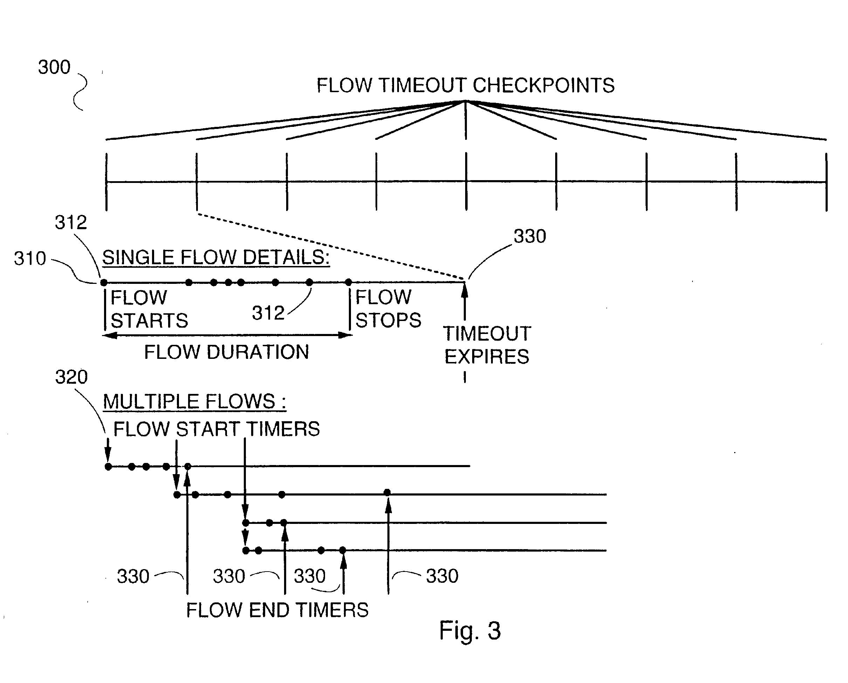

Fig. 3 illustrates a model 300 of a flow based on traffic activity from endpoints as perceived at a given network measurement point. An IP flow 310 is a sequence of packets 312 sent from a particular source to a particular (unicast or multicast) destination that are related in terms of their routing and any local handling policy they may require. Flows in a connectionless network perform a function similar to the role the connection plays in a connection oriented network. The nature of that special handling might be conveyed to the routers by a control protocol, such as a resource reservation protocol, or by information within the flow's packets 312 themselves, e.g., in a hop-by-hop option. Typically, IP Flows 310 are characterized according to the fields in the IP/L3 header that determines routing decisions such as: type of service, protocol, source address, destination address, source port, and destination port. Two packets belong to the same flow if the values of these fields are identical. In IP version 6, the inclusion of a Flow Label in the packet header allows the forwarding process to be enhanced by caching routing decisions. There may be multiple active flows 320 from a source to a destination, as well as traffic that is not associated with any flow (not shown). A flow is uniquely identified by the combination of a source address and a non-zero Flow Label. Packets that do not belong to a flow carry a Flow Label of zero. In the model, a single flow 310 is active as long as observed packets 312 that meet the flow specification are observed separated in time by less than a specified timeout value 330. As discussed above, multiple independent flows 320 may be active simultaneously. The flow end timers 330 for the different flows may expire at different times.

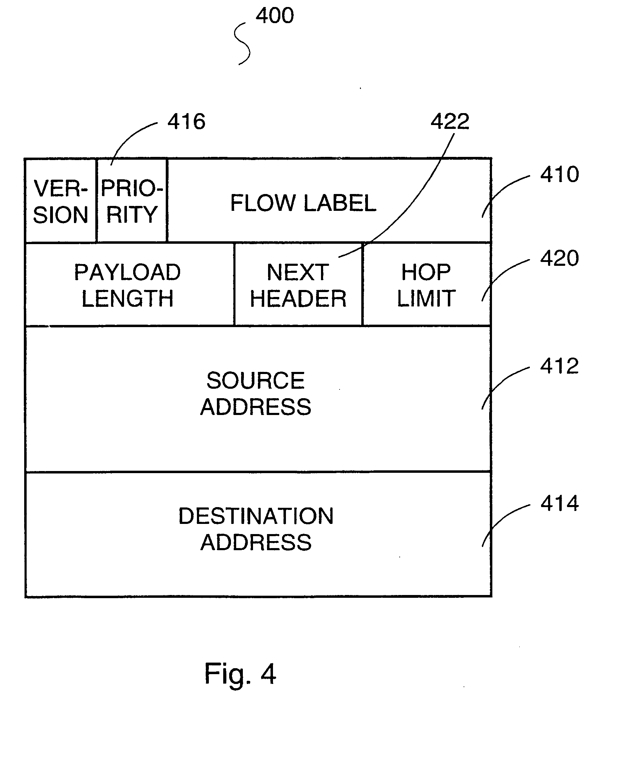

Fig. 4 illustrates the IPv6 header format 400. For IPv6, the 24-bit Flow Label field 410 in the IPv6 header may be used by a source to label those packets for which it requests special handling by the IPv6 routers, such as non-default quality of service or "real-time" service. Hosts or routers that do not support the functions of the Flow Label field 410 are required to set the field to zero when originating a packet, pass the field on unchanged when forwarding a packet, and ignore the field when receiving a packet.

A Flow Label 410 is assigned to a flow by the flow's source node. New Flow Labels must be chosen (pseudo-)randomly and uniformly. The purpose of the random allocation is to make any set of bits within the Flow Label 410 suitable for use as a hash key by routers, for purposes of looking up the state associated with the flow.

All packets belonging to the same flow must be sent with the same source address 412, destination address 414, priority 416, and Flow Label 410. If any of those packets includes a hop-by-hop options header, then they all must be originated with the same hop-by-hop options header contents excluding the Next Header field 422 of the hop-by-hop options header 420. If any of those packets includes a Routing header, then they all must be originated with the same contents in all extension headers up to and including the Routing header (excluding the Next Header field in the Routing header). The routers or destinations are permitted, but not required, to verify that these conditions are satisfied. If a violation is detected, it should be reported to the source by an ICMP Parameter Problem message.

Routers are free to "opportunistically" set up flow-handling state for any flow, even when no explicit flow establishment information has been provided to them via a control protocol, a hop-by-hop option, or other means. For example, upon receiving a packet from a particular source with an unknown, non-zero Flow Label 410, a router may process its IPv6 header and any necessary extension headers as if the Flow Label 410 were zero. That processing would include determining the next-hop interface, and possibly other actions, such as updating a hop-by-hop option, advancing the pointer and addresses in a Routing header, or deciding on how to queue the packet based on its Priority field 416. The router may then choose to "remember" the results of those processing steps and cache that information, using the source address 412 plus the Flow Label 410 as the cache key. Subsequent packets with the same source address 412 and Flow Label 410 may then be handled by referring to the cached information rather than examining all those fields that, according to the requirements of the previous paragraph, can be assumed unchanged from the first packet seen in the flow.

A cached flow-handling state that is set up opportunistically, as discussed in the preceding paragraph, must be discarded within a predetermined time limit, e.g., 6 seconds, after it is established, regardless of whether or not packets of the same flow continue to arrive. If another packet with the same source address 412 and Flow Label 410 arrives after the cached state has been discarded, the packet undergoes full, normal processing (as if its Flow Label 410 were zero), which may result in the re-creation of cached flow state for that flow.

The lifetime of flow-handling state that is set up explicitly, for example by a control protocol or a hop-by-hop option, must be specified as part of the specification of the explicit set-up mechanism; it may exceed the predetermined time limit.

A source cannot re-use a Flow Label 410 for a new flow within the lifetime of any flow-handling state that might have been established for the prior use of that Flow Label 410. Since flow-handling state with the lifetime may be established opportunistically for any flow, the minimum interval between the last packet of one flow and the first packet of a new flow using the same Flow Label 410 is the same predetermined period of time. Flow Labels 410 used for explicitly set-up flows with longer flow-state lifetimes must remain unused for those longer lifetimes before being re-used for new flows.

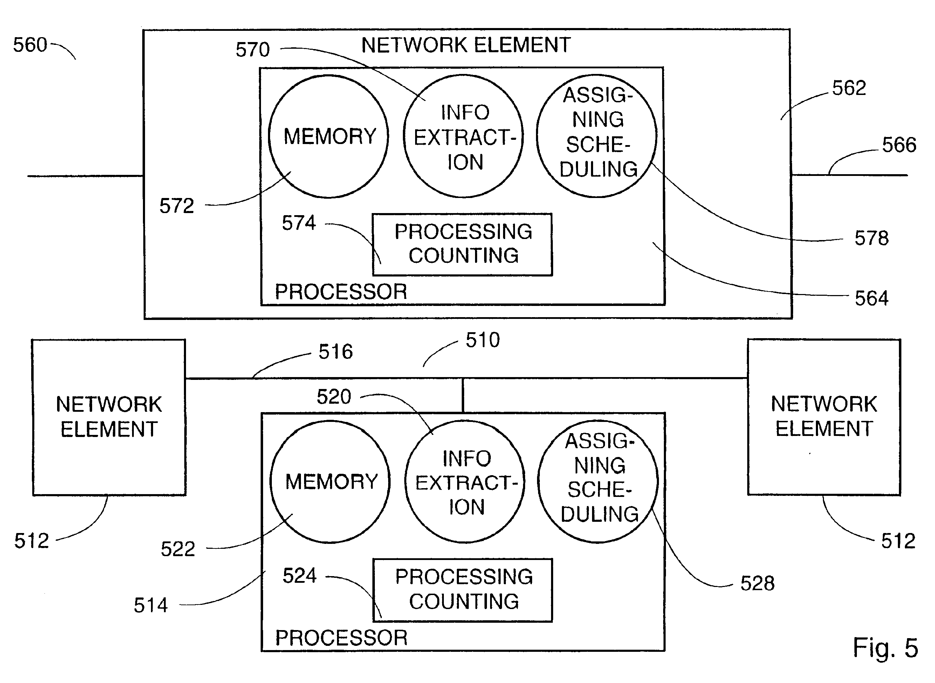

Internally to a network element, there are two basic ways to monitor data carried over an L2 connection: Point to Multipoint connection and ingress (or egress) of the network element. Fig. 5 illustrates these two monitoring methods. Packet snooping is a function that is typically done periodically. Snooping is done for a certain amount of time, which has to be long enough to take into account packet length variation and packet inter-arrival time. The monitoring period can either be specified in terms of time units, in terms of packet counts or, any combination of these two.

In Point to Multipoint connection snooping 510, L2 PDUs are replicated within the network element 512 and directed to specific entity 514 for IP level processing. This analysis can be done in special unit 514 that is not normally along the data path 516. In ingress/egress snooping 560, IP packet analysis is done in the ingress (or egress) of the network element 562. In this alternative, the analysis function is built into a network unit 562 that is normally along the data path 566.

The analysis of the packets is independent of the method that is used to implement the monitoring function. It can be assumed that either only IPv4 or IPv6 traffic is carried over any L2 connection, but not both. As the parts of the IP header structures that contain IP address information are in the fixed position from the beginning of the header, address information can be easily extracted from the packets by the processors 514, 564. This address information can then be analyzed by the processors 514, 564 to estimate the number of flows along the data paths 516, 566.

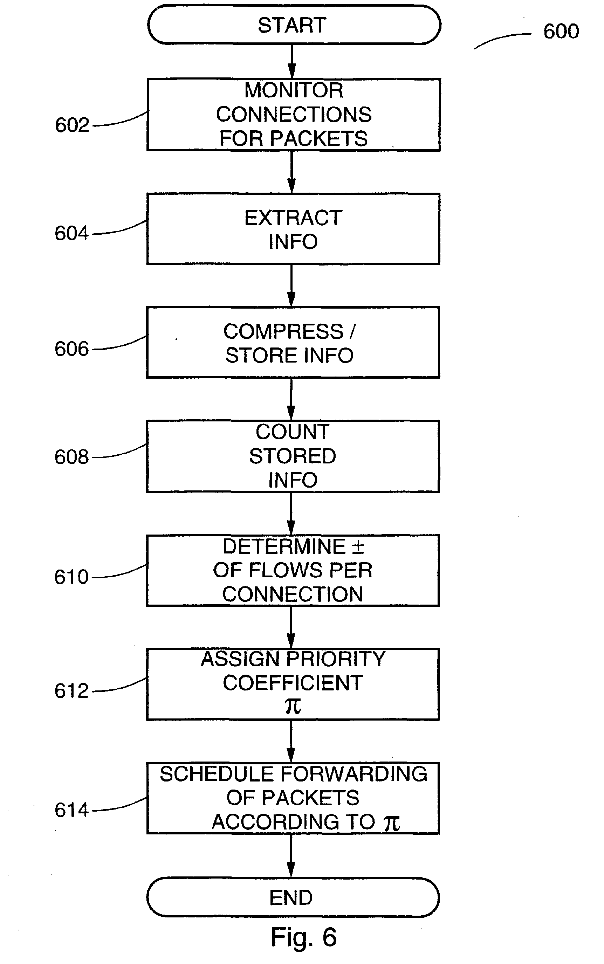

Fig. 6 illustrates a flowchart 600 depicting the steps for approximating the number of flows and scheduling fair traffic allocation. Only an approximation of the number of flows is needed to provide fairness, i.e., more equal access to network resources. Thus, the approximation analysis does not necessarily need to be very detailed. First, the connections are monitored for packets 602 and information is extracted from the packets 604. The extracted information may then be stored in memory 606. To conserve the memory, the data stored in memory may first be compressed. Next, after a predetermined period of time, the extracted information stored in memory is counted 608. Using this information, a determination of the number of flows per connection may be obtained 610.

Several different methods may be used to approximate the number of flows. For example, the full source address:port and full destination address:port may be extracted from the header. Each unique full source address:port and full destination address:port pair can then be stored as a tuple in a database. At the end of the monitoring period, the number of stored tuples may be counted. Alternatively, since the same network addresses may be shared by different flows, only the host part of the IP address together with port can be extracted from the headers to simplify implementation. Each unique tuple may then be stored and then counted. Finally, any combination of the described methods may be used.

As stated above, the data can be compressed 606. This may be accomplished, for example, by a hashing function that is calculated over the extracted header part to conserve the memory required to store gathered data. Since only the approximate number of the flows is needed, using a hash function that occasionally gives identical values for dissimilar samples, i.e. using too short hash values, is not an issue. Therefore, a relatively short and simple implementation can be used. Yet, in the end of the snooping period, the number of tuples that have been recorded can be counted yielding an estimate of the number of different flows.

Rather than scheduling the IP flows according to traffic volume solely, a priority coefficient may be assigned to a flow taking into account the number of flows per connection. Since multiple L2 connections having the same traffic class and aggregated IP flows may be competing for the same network resources, fairness , i.e., equal access to the network resources, must be provided. Thus, the assignment of a priority coefficient for each of the IP flows 612 achieves better fairness. For example, a higher priority can be given to data units, e.g., cells or frames, belonging to a connection having more users. Furthermore, if there are two L2 connections that have an identical L2 specific traffic class, their mutual priority can also be defined. Finally, the assignment of the priority coefficients may account for network management criteria.

The packets forwarded in the IP flows may be scheduled according to the priority coefficient 614.

The priority coefficient can be used to adjust this geometric fairness to changing conditions in the network, i.e. to favor certain connections over others.

In practice, for example, in case of ATM, this scheme would lead to the introduction of a new ATM traffic class variation, subclass that varies from one connection to another. In addition to standard UBR traffic, there may be designated "Fair UBR" which would be defined by the number of flows and a priority factor. The number of flows is a dynamic factor, whereas a priority coefficient can be more static in nature.

Priority factors may be given different values, e.g. based on the source and/or destination IP addresses or the link (logical or physical) where the traffic enters the network element. This enables differentiation of flows based on operational and administrative reasons to favor some flows or group of flows. For example, flows used to interconnect corporate sites and external partner companies can be prioritized based on extra fee. Thus, an operator can prioritize all internal traffic.

Referring to Fig. 5 again, the data paths 516, 566 may be monitored by a processor 514, 564 to identify the number of IP flows for the connections 516, 566 by analyzing the packets carried over the connections 516, 566. The processor 514, 564 extracts address information 520, 570 from the packets for a predetermined sample period, stores the extracted address information in memory 522, 572 and, after the predetermined period of time, counts 524, 574 the number of extractions stored in the memory 522, 572. The processor 514, 564 then estimates the number of IP flows based upon the number of extractions counted. Finally, the processor 514, 564 assigns 528, 578 a priority coefficient for each of the IP flows and schedules 528, 578 the forwarding of packets in the IP flows according to the priority coefficient.

The foregoing description of the exemplary embodiment of the invention has been presented for the purpose of illustration and description. It is not intended to be exhaustive or to limit the invention to the precise form disclosed. Many modifications and variations are possible in light of the above teaching. It is intended that the scope of the invention not be limited with this detailed description, but rather by the claims appended hereto.

## Claims

1. A method (600) of prioritizing a scheduling of internet protocol flows, comprising:

   identifying a number of internet protocol flows for each of a plurality of connections;

   **characterized in that** the method further comprising:

assigning (612) a priority to each of the plurality of connections based on the identified number of internet protocol flows, the priority assigning further comprises defining a probability $P_i$ that a data unit belonging to a flow carried over a connection $A_i$ is selected for forwarding according to

$$P_i = \frac{\sigma_i * x_i}{\sum\limits_{i=1}^{n} x_i}$$

where $x_i$ represents a number of flows carried over the connection $A_i$, $\sigma_i$ represents a priority assigned to flows $X_i$, and n represents a number of connections; and
scheduling (614) packet forwarding of the internet protocol flows according to the assigned priority.

2. The method of claim 1, wherein the step of identifying the number of internet protocol flows further comprising:

   monitoring (602) packets carried over a connection;
   extracting (604) address information from the packets for a predetermined sample period;
   storing (606) the extracted address information;
   counting (608) the number of extractions stored; and
   estimating (610) the number of internet protocol flows based upon the number of stored extractions counted.

3. The method of claim 2, wherein the step of extracting address information comprises extracting full source address:port and destination address:port from the packets.

4. The method of claim 2, wherein the step of extracting address information comprises extracting only a host part of an internet protocol address and port from the packets.

5. The method of claim 2, wherein the step of storing the address information comprises compressing the extracted address information using a hashing function.

6. The method of claim 2, wherein the step of monitoring packets comprising:

   replicating protocol data units; and
   directing the replicated protocol data units to a processor for address extraction.

7. The method of claim 2, wherein the processor is outside the data path.

8. The method of claim 2, wherein the step of monitoring packets comprises sampling the packets along the data path.

9. The method of claim 2, wherein the predetermined sample period comprises a selected time duration.

10. The method of claim 2, wherein the predetermined sample period comprises the time required to sample a predetermined number of packets.

11. The method of claim 1, wherein the step of assigning the priority further comprises giving a higher priority to a connection having more users.

12. The method of claim 1, wherein the step of assigning the priority is based upon a fee structure for different flow types.

13. An apparatus for prioritizing a scheduling of internet protocol flows, comprising:

   a monitor for identifying a number of internet protocol flows for each of a plurality of connections;

   **characterized in that** the apparatus further comprising:

   a prioritizer, operatively coupled to the monitor, for assigning a priority to each of the plurality of connections based on the identified number of internet protocol flows, the priority assigning further comprises defining a probability $P_i$ that a data unit belonging to a flow carried over a connection $A_i$ is selected for forwarding according to

$$P_i = \frac{\sigma_i * x_i}{\sum\limits_{i=1}^{n} x_i}$$

   where $x_i$ represents a number of flows carried over the connection $A_i$, $\sigma_i$ represents a priority assigned to flows $X_i$, and n represents a number of connections; and
   a scheduler, operatively coupled to the monitor, for scheduling packet forwarding of the internet protocol flows according to the assigned priority.

14. The apparatus of claim 13, wherein the monitor comprises:

   means for analyzing packets carried over a connection;

means for extracting address information from the packets for a predetermined sample period;
a memory for storing the extracted address information;
a counter for counting the number of extractions stored in the memory; and
a processor for estimating the number of internet protocol flows based upon the number of extractions counted.

15. The apparatus of claim 14, wherein the means for extracting address information comprises means for extracting full source address:port and destination address:port from the packets.

16. The apparatus of claim 14, wherein the means for extracting address information comprises means for extracting only a host part of an internet protocol address and port from the packets.

17. The apparatus of claim 14, wherein the processor comprises data compression means for compressing the extracted address information.

18. The apparatus of claim 13, wherein the monitor comprises:

means for replicating protocol data units; and
means for directing the replicated protocol data units to a processor for address extraction.

19. The apparatus of claim 14, wherein the processor is outside the data path.

20. The apparatus of claim 14, wherein the processor samples the packets along the data path.

21. The apparatus of claim 14, wherein the predetermined sample period comprises a selected time duration.

22. The apparatus of claim 14, wherein the predetermined sample period comprises a time required to sample a predetermined number of packets.

23. The apparatus of claim 13, wherein a higher priority is given for a connection having more users.

24. The apparatus of claim 13, wherein the priority is based upon a fee structure for different flow types.

**Patentansprüche**

1. Verfahren (600) zum Priorisieren einer Zeitvorgabe von Internetprotokollabläufen, das Folgendes umfasst:

Identifizieren einer Anzahl von Internetprotokollabläufen für jede von mehreren Verbindungen

**dadurch gekennzeichnet, dass** das Verfahren ferner Folgendes umfasst:

Zuweisen (612) einer Priorität zu jeder der mehreren Verbindungen basierend auf der identifizierten Anzahl von Internetprotokollabläufen, wobei das Zuweisen der Priorität ferner das Definieren einer Wahrscheinlichkeit $P_i$, dass eine Dateneinheit, die zu einem Ablauf gehört, der über eine Verbindung $A_i$ übertragen wird, zum Weiterleiten ausgewählt wird, gemäß:

$$P_i = \frac{\sigma_i * x_i}{\sum_{i=1}^{n} x_i}$$

umfasst, wobei $x_i$ eine Anzahl von über die Verbindung $A_i$ geführten Abläufen repräsentiert, $\sigma_i$ eine den Abläufen $X_i$ zugewiesene Priorität repräsentiert und $n$ eine Anzahl von Verbindungen repräsentiert; und
zeitliches Vorgeben (614) einer Paketweiterleitung der Internetprotokollabläufe gemäß der zugewiesenen Priorität.

2. Verfahren nach Anspruch 1, wobei der Schritt des Identifizierens der Anzahl von Internetprotokollabläufen ferner Folgendes umfasst:

Überwachen (602) von Paketen, die über eine Verbindung übertragen werden;
Extrahieren (604) von Adressinformationen aus den Paketen für eine vorbestimmte Abtastperiode;
Speichern (606) der extrahierten Adressinformationen;
Zählen (608) der Anzahl der gespeicherten Extraktionen; und
Schätzen (610) der Anzahl von Internetprotokollabläufen basierend auf der Anzahl der gespeicherten gezählten Internetprotokollabläufe.

3. Verfahren nach Anspruch 2, wobei der Schritt des Extrahierens von Adressinformationen das Extrahieren von vollständiger Quellenadresse:Port und Zieladresse:Port aus den Paketen umfasst.

4. Verfahren nach Anspruch 2, wobei der Schritt des Extrahierens von Adressinformationen das Extrahieren nur eines Host-Abschnitts einer Internetprotokolladresse und eines Ports aus den Paketen umfasst.

**5.** Verfahren nach Anspruch 2, wobei der Schritt des Speicherns der Adressinformationen das Komprimieren der extrahierten Adressinformationen unter Verwendung einer Hash-Funktion umfasst.

**6.** Verfahren nach Anspruch 2, wobei der Schritt des Überwachens von Paketen Folgendes umfasst:

Replizieren von Protokolldateneinheiten; und Lenken der replizierten Protokolldateneinheiten zu einem Prozessor zur Adressextraktion.

**7.** Verfahren nach Anspruch 2, wobei sich der Prozessor außerhalb des Datenpfads befindet.

**8.** Verfahren nach Anspruch 2, wobei der Schritt des Überwachens von Paketen das Abtasten der Pakete entlang dem Datenpfad umfasst.

**9.** Verfahren nach Anspruch 2, wobei die vorbestimmte Abtastperiode eine ausgewählte Zeitdauer umfasst.

**10.** Verfahren nach Anspruch 2, wobei die vorbestimmte Abtastperiode die Zeit umfasst, die erforderlich ist, um eine vorbestimmte Anzahl von Paketen abzutasten.

**11.** Verfahren nach Anspruch 1, wobei der Schritt des Zuweisens der Priorität ferner das Erteilen einer höheren Priorität an eine Verbindung, die mehr Anwender aufweist, umfasst.

**12.** Verfahren nach Anspruch 1, wobei der Schritt des Zuweisens der Priorität auf einer Gebührenstruktur für unterschiedliche Ablauftypen basiert.

**13.** Vorrichtung zum Priorisieren einer Zeitvorgabe von Internetprotokollabläufe, die Folgendes umfasst:

eine Überwachungseinrichtung zum Identifizieren einer Anzahl von Internetprotokollabläufen für jede von mehreren Verbindungen;

**dadurch gekennzeichnet, dass** die Vorrichtung ferner Folgendes umfasst:

eine Priorisierungseinrichtung, die betriebstechnisch mit der Überwachungseinrichtung gekoppelt ist, zum Zuweisen einer Priorität zu jeder der mehreren Verbindungen basierend auf der identifizierten Anzahl von Internetprotokollabläufen, wobei das Zuweisen der Priorität ferner das Definieren einer Wahrscheinlichkeit $P_i$, dass eine Dateneinheit, die zu einem Ablauf gehört, der über eine Verbindung $A_i$ übegetragen wird, zum Weiterleiten ausgewählt wird, gemäß:

$$P_i = \frac{\sigma_i * x_i}{\sum\limits_{i=1}^{n} x_i}$$

umfasst, wobei $x_i$ eine Anzahl von über die Verbindung $A_i$ getragenen Abläufe repräsentiert, $\sigma_i$ eine den Abläufen $X_i$ zugewiesene Priorität repräsentiert und $n$ eine Anzahl von Verbindungen repräsentiert; und
eine Zeitvorgabeeinrichtung, die betriebstechnisch mit der Überwachungseinrichtung gekoppelt ist, zum zeitlichen Vorgeben einer Paketweiterleitung der Internetprotokollabläufe gemäß der zugewiesenen Priorität.

**14.** Vorrichtung nach Anspruch 13, wobei die Überwachungseinrichtung Folgendes umfasst:

Mittel zum Analysieren von Paketen, die über eine Verbindung übertragen werden;
Mittel zum Extrahieren von Adressinformationen aus den Paketen für eine vorbestimmte Abtastperiode;
einen Speicher zum Speichern der extrahierten Adressinformationen;
einen Zähler zum Zählen der Anzahl der in dem Speicher gespeicherten Extraktionen; und
einen Prozessor zum Schätzen der Anzahl der Internetprotokollabläufe basierend auf der Anzahl der gezählten Extraktionen.

**15.** Vorrichtung nach Anspruch 14, wobei die Mittel zum Extrahieren von Adressinformationen Mittel zum Extrahieren von vollständiger Quellenadresse:Port und Zieladresse:Port aus den Paketen umfassen.

**16.** Vorrichtung nach Anspruch 14, wobei die Mittel zum Extrahieren von Adressinformationen Mittel zum Extrahieren nur eines Host-Abschnitts einer Internetprotokolladresse und eines Ports aus den Paketen umfassen.

**17.** Vorrichtung nach Anspruch 14, wobei der Prozessor Datenkompressionsmittel zum Komprimieren der extrahierten Adressinformationen umfasst.

**18.** Vorrichtung nach Anspruch 13, wobei die Überwachungseinrichtung Folgendes umfasst:

Mittel zum Replizieren von Protokolldateneinheiten; und
Mittel zum Lenken der replizierten Protokolldateneinheiten zu einem Prozessor zur Adressextraktion.

**19.** Vorrichtung nach Anspruch 14, wobei sich der Prozessor außerhalb des Datenpfads befindet.

20. Vorrichtung nach Anspruch 14, wobei der Prozessor die Pakete entlang dem Datenpfad abtastet.

21. Vorrichtung nach Anspruch 14, wobei die vorbestimmte Abtastperiode eine ausgewählte Zeitdauer umfasst.

22. Vorrichtung nach Anspruch 14, wobei die vorbestimmte Abtastperiode eine Zeit umfasst, die erforderlich ist, um eine vorbestimmte Anzahl von Paketen abzutasten.

23. Vorrichtung nach Anspruch 13, wobei einer Verbindung, die mehr Anwender aufweist, eine höhere Priorität erteilt wird.

24. Vorrichtung nach Anspruch 13, wobei die Priorität auf einer Gebührenstruktur für unterschiedliche Ablauftypen basiert.

**Revendications**

1. Procédé (600) d'attribution de priorité à un ordonnancement de flux de protocole Internet, comprenant :

l'identification d'un nombre de flux de protocole Internet pour chacune d'une pluralité de connexions ;

**caractérisé en ce que** le procédé comprend en outre

l'attribution (612) d'une priorité à chacune de la pluralité de connexions en fonction du nombre identifié de flux de protocole Internet, l'attribution de priorité comprenant en outre la définition d'une probabilité $P_i$ qu'une unité de donnée appartenant à un flux transporté sur une connexion $A_i$ est sélectionnée en vue d'être acheminée en fonction de

$$P_i = \frac{\sigma_i * x_i}{\sum_{i=1}^{n} x_i}$$

où $x_i$ représente un nombre de flux transportés sur la connexion $A_i$, $\sigma_i$ représente une priorité attribuée aux flux $X_i$, et n représente un nombre de connexions ; et l'ordonnancement (614) de l'acheminement des paquets des flux de protocole Internet en fonction de la priorité attribuée.

2. Procédé selon la revendication 1, dans lequel l'étape d'identification du nombre de flux de protocole Internet comprend en outre :

la surveillance (602) de paquets transportés sur une connexion ; l'extraction (604) d'informations d'adresse des paquets pendant une période d'échantillonnage prédéterminée ; la mémorisation (606) des informations d'adresse de paquets ; le comptage (608) du nombre d'extractions mémorisées ; et l'estimation (610) du nombre de flux de protocole Internet en fonction du nombre d'extractions mémorisées comptées.

3. Procédé selon la revendication 2, dans lequel l'étape d'extraction d'informations d'adresse comprend l'extraction d'une adresse:port source et d'une adresse:port destinataire complètes des paquets.

4. Procédé selon la revendication 2, dans lequel l'étape d'extraction d'informations d'adresse comprend l'extraction uniquement d'une partie hôte d'une adresse et d'un port de protocole Internet des paquets.

5. Procédé selon la revendication 2, dans lequel l'étape de mémorisation des informations d'adresse comprend la compression des informations d'adresse extraites en utilisant une fonction de hachage.

6. Procédé selon la revendication 2, dans lequel l'étape de surveillance de paquets comprend :

la réplique des unités de données de protocole ; et l'orientation des unités de données de protocole répliquées vers un processeur en vue de l'extraction d'adresse.

7. Procédé selon la revendication 2, dans lequel le processeur est en dehors du chemin de données.

8. Procédé selon la revendication 2, dans lequel l'étape de surveillance des paquets comprend l'échantillonnage des paquets le long du chemin de données.

9. Procédé selon la revendication 2, dans lequel la période d'échantillonnage prédéterminée comprend une durée de temps sélectionnée.

10. Procédé selon la revendication 2, dans lequel la période d'échantillonnage prédéterminée comprend le temps requis pour échantillonner un nombre prédéterminé de paquets.

**11.** Procédé selon la revendication 1, dans lequel l'étape d'attribution de la priorité comprend en outre l'attribution d'une priorité supérieure à une connexion ayant plus d'utilisateurs.

**12.** Procédé selon la revendication 1, dans lequel l'étape d'attribution de la priorité est fonction d'une structure de tarification selon les différents types de flux.

**13.** Appareil d'attribution de priorité à un ordonnancement de flux de protocole Internet, comprenant :

un contrôleur pour identifier un nombre de flux de protocole Internet pour chacune d'une pluralité de connexions ;

**caractérisé en ce que** l'appareil comprend en outre

un dispositif d'attribution de priorité, couplé opérationnellement à l'unité de contrôle, pour attribuer une priorité à chacune de la pluralité de connexions en fonction du nombre identifié de flux de protocole Internet, l'attribution de priorité comprenant en outre la définition d'une probabilité $P_i$ qu'une unité de donnée appartenant à un flux transporté sur une connexion $A_i$ est sélectionnée en vue d'être acheminée en fonction de

$$P_i = \frac{\sigma_i * x_i}{\sum_{j=1}^{n} x_i}$$

où $x_i$ représente un nombre de flux transportés sur al connexion $A_i$, $\sigma_i$ représente une priorité attribuée aux flux $X_i$, et n représente un nombre de connexions ; et
un ordonnanceur, couplé opérationnellement au contrôleur pour ordonnancer l'acheminement des flux de protocole Internet en fonction de la priorité attribuée.

**14.** Appareil selon la revendication 13, dans lequel le contrôleur comprend:

un moyen pour analyser les paquets transportés sur une connexion ;
un moyen pour extraire des informations d'adresse des paquets pendant une période d'échantillonnage prédéterminée ;
une mémoire pour mémoriser les informations d'adresse de paquets ;
un compteur pour compter le nombre d'extractions mémorisées dans la mémoire ; et
un processeur pour estimer le nombre de flux de protocole Internet en fonction du nombre d'extractions comptées.

**15.** Appareil selon la revendication 14, dans lequel le moyen d'extraction d'informations d'adresse comprend un moyen d'extraction d'une adresse:port source et d'une adresse:port destinataire complètes des paquets.

**16.** Appareil selon la revendication 14, dans lequel le moyen d'extraction d'informations d'adresse comprend un moyen d'extraction uniquement d'une partie hôte d'une adresse et d'un port de protocole Internet des paquets.

**17.** Appareil selon la revendication 14, dans lequel le processeur comprend un moyen de compression de données pour compresser les informations d'adresse extraites.

**18.** Appareil selon la revendication 13, dans lequel le contrôleur comprend :

un moyen pour répliquer des unités de données de protocole ; et
un moyen pour orienter les unités de données de protocole répliquées vers un processeur en vue de l'extraction d'adresse.

**19.** Appareil selon la revendication 14, dans lequel le processeur est en dehors du chemin de données.

**20.** Appareil selon la revendication 14, dans lequel le processeur échantillonne les paquets le long du chemin de données.

**21.** Appareil selon la revendication 14, dans lequel la période d'échantillonnage prédéterminée comprend une durée de temps sélectionnée.

**22.** Appareil selon la revendication 14, dans lequel la période d'échantillonnage prédéterminée comprend un temps requis pour échantillonner un nombre prédéterminé de paquets.

**23.** Appareil selon la revendication 13, dans lequel une priorité supérieure est données à une connexion ayant plus d'utilisateurs.

**24.** Appareil selon la revendication 13, dans lequel la priorité est fonction d'une structure de tarification selon les différents types de flux.

100

180

110 Application

120 Presentation

130 Session

140 Transport

150 Network

160 Data Link

170 Physical

182

Fig. 1

Fig. 2

EP 1 161 851 B1

FLOW TIMEOUT CHECKPOINTS

300

312
310

SINGLE FLOW DETAILS:

FLOW STARTS
FLOW STOPS
312
FLOW DURATION

330

TIMEOUT EXPIRES

320

MULTIPLE FLOWS:
FLOW START TIMERS

330
330
330
330
330

FLOW END TIMERS

Fig. 3

400

416 422

| VER-SION | PRIO-RITY | FLOW LABEL | | 410 |
| PAYLOAD LENGTH | | NEXT HEADER | HOP LIMIT | 420 |
| SOURCE ADDRESS | | | | 412 |
| DESTINATION ADDRESS | | | | 414 |

Fig. 4

Fig. 5

EP 1 161 851 B1

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0763915 A2

- EP 0782300 A2

**Non-patent literature cited in the description**

- **P. NEWMAN.** Flow Labelled IPP: A Connectionless Approach to ATM. *IEEE Infocom publication D2,* March 1996, 1251-1260

- The Basics Book of OSI and Network Management. Motorola Codex from Addison-Wesley Publishing Company, Inc, September 1992